# EUROPEAN PATENT APPLICATION

(11) **EP 4 564 956 A1**
(43) Date of publication of application: **04.06.2025**
(21) Application number: 22952569.6
(22) Date of filing: 29.07.2022
(51) Int. Cl.: H04W 72/04

(54) **UPLINK TRANSMISSION SWITCHING METHOD AND DEVICE, AND UPLINK TRANSMISSION SWITCHING INDICATION METHOD AND DEVICE**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2022/109248
(87) International publication number: WO 2024/021123

(57) **Abstract**

The present disclosure relates to an uplink transmission switching method and device, and an uplink transmission switching indication method and device. The uplink transmission switching method comprises: determining a reference uplink frequency band group; and performing uplink transmission switching on a first uplink frequency band so as to switch to a second uplink frequency band, wherein at least one of the first uplink frequency band and the second uplink frequency band belongs to the reference uplink frequency band group. According to the present disclosure, a terminal can determine the reference uplink frequency band group and then switch from the first uplink frequency band to the second uplink frequency band during uplink transmission switching, and at least one of the first uplink frequency band and the second uplink frequency band belongs to the reference uplink frequency band group. Because at least one of the first uplink frequency band and the second uplink frequency band belongs to the reference uplink frequency band group, the number of combinations of the first uplink frequency band and the second uplink frequency band that the terminal needs to consider in preparation for uplink transmission switching is relatively small, thereby facilitating the reduction of complexity of performing uplink transmission switching by the terminal.

## Description

### TECHNICAL FIELD

The present disclosure relates to the field of communication technology, and in particular, to a method for uplink transmission switching, a method for uplink transmission switching indication, a system for uplink transmission switching, an apparatus for uplink transmission switching, an apparatus for uplink transmission switching indication, a communication apparatus, and a computer readable storage medium.

### BACKGROUND

In the related art, the terminal may indicate to perform uplink transmission switching (UL TX switching) on two uplink frequency bands. With the development of communication technologies, there is proposed a need to perform uplink transmission switching on more uplink frequency bands. For example, there is a need for a terminal to support uplink transmission switching among three or four uplink frequency bands.

Compared with performing uplink transmission switching among fewer frequency bands, the complexity of performing uplink transmission switching among more uplink frequency bands is also higher, where the complexity is mainly reflected in aspects such as hardware complexity, software complexity, and processing complexity in the switching process.

### SUMMARY

In view of this, according to embodiments of the present disclosure, there is provided a method for uplink transmission switching, a method for uplink transmission switching indication, a system for uplink transmission switching, an apparatus for uplink transmission switching, an apparatus for uplink transmission switching indication, a communication apparatus, and a computer readable storage medium, to solve the technical problem in the related art.

According to a first aspect of the embodiments of the present disclosure, there is provided a method for uplink transmission switching, performed by a terminal, and the method includes: determining a reference uplink frequency band group; performing uplink transmission switching on a first uplink frequency band to switch to a second uplink frequency band, where at least one uplink frequency band of the first uplink frequency band or the second uplink frequency band belongs to the reference uplink frequency band group.

According to a second aspect of the embodiments of the present disclosure, there is provided a method for uplink transmission switching indication, performed by a network device, and the method includes: determining a reference uplink frequency band group; and indicating a terminal to perform uplink transmission switching on a first uplink frequency band to switch to a second uplink frequency band, where at least one uplink frequency band of the first uplink frequency band or the second uplink frequency band belongs to the reference uplink frequency band group.

According to a third aspect of the embodiments of the present disclosure, there is provided an apparatus for uplink transmission switching, including: a processing module configured to determine a reference uplink frequency band group, and perform uplink transmission switching on a first uplink frequency band to switch to a second uplink frequency band, where at least one uplink frequency band of the first uplink frequency band or the second uplink frequency band belongs to the reference uplink frequency band group.

According to a fourth aspect of the embodiments of the present disclosure, there is provided an apparatus for uplink transmission switching indication, including: a processing module, configured to determine a reference uplink frequency band group; and a sending module, configured to indicate a terminal to perform uplink transmission switching on a first uplink frequency band to switch to a second uplink frequency band, where at least one uplink frequency band of the first uplink frequency band or the second uplink frequency band belongs to the reference uplink frequency band group.

According to a fifth aspect of the embodiments of the present disclosure, there is provided a system for uplink transmission switching, including a terminal and a network device, where the terminal is configured to implement the method for uplink transmission switching, and the network device is configured to implement the method for uplink transmission switching indication.

According to a sixth aspect of the embodiments of the present disclosure, there is provided a communication apparatus, including: a processor; and a memory, configured to store a computer program; where when the computer program is executed by the processor, the method for uplink transmission switching is implemented.

According to a seventh aspect of the embodiments of the present disclosure, there is provided a communication apparatus, including: a processor; and a memory, configured to store a computer program; where when the computer program is executed by the processor, the method for uplink transmission switching indication is implemented.

According to an eighth aspect of the embodiments of the present disclosure, there is provided a computer readable storage medium for storing a computer program, and when the computer program is executed by a processor, the method for uplink transmission switching is implemented.

According to a ninth aspect of the embodiments of the present disclosure, there is provided a computer readable storage medium for storing a computer program, and when the computer program is executed by a processor, the method for uplink transmission switching indication is implemented.

According to embodiments of the present disclosure, the terminal may determine the reference uplink frequency band group, and then switch from the first uplink frequency band to the second uplink frequency band when performing uplink transmission switching, where at least one uplink frequency band of the first uplink frequency band or the second uplink frequency band belongs to the reference uplink frequency band group. Since at least one uplink frequency band of the first uplink frequency band or the second uplink frequency band belongs to the reference uplink frequency band group, there is relatively less combinations of the first uplink frequency band and the second uplink frequency band that need to be considered by the terminal for performing uplink transmission switching. In this case, there may be relatively less combinations of the first uplink frequency band and the second uplink frequency band that need to be considered by the terminal to prepare for performing uplink transmission switching, thus facilitating reducing the complexity of performing uplink transmission switching by the terminal.

### BRIEF DESCRIPTION OF THE DRAWINGS

In order to more clearly illustrate the technical solutions in the embodiments of the present disclosure, the drawings required in the description of the embodiments will be briefly described below. Obviously, the drawings in the following description are merely some embodiments of the present disclosure, and for those of ordinary skill in the art, other drawings may be obtained according to these drawings without creative efforts.
FIG. 1 is a schematic flowchart of a method for uplink transmission switching shown according to an embodiment of the present disclosure.
FIG. 2 is a schematic flowchart of another method for uplink transmission switching shown according to an embodiment of the present disclosure.
FIG. 3 is a schematic flowchart of still another method for uplink transmission switching shown according to an embodiment of the present disclosure.
FIG. 4 is a schematic flowchart of still another method for uplink transmission switching shown according to an embodiment of the present disclosure.
FIG. 5 is a schematic flowchart of a method for uplink transmission switching indication shown according to an embodiment of the present disclosure.
FIG. 6 is a schematic flowchart of another method for uplink transmission switching indication shown according to an embodiment of the present disclosure.
FIG. 7 is a schematic flowchart of still another method for uplink transmission switching indication shown according to an embodiment of the present disclosure.
FIG. 8 is a schematic flowchart of still another method for uplink transmission switching indication shown according to an embodiment of the present disclosure.
FIG. 9 is a schematic block diagram of an apparatus for uplink transmission switching shown according to an embodiment of the present disclosure.
FIG. 10 is a schematic block diagram of an apparatus for uplink transmission switching indication shown according to an embodiment of the present disclosure.
FIG. 11 is a schematic block diagram of an apparatus for uplink transmission switching indication shown according to an embodiment of the present disclosure.
FIG. 12 is a schematic block diagram of an apparatus for uplink transmission switching shown according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only a part of embodiments of the present disclosure, not all of the embodiments of the present disclosure. All other embodiments obtained by those of ordinary skill in the art based on the embodiments of the present disclosure without creative efforts shall fall within the protection scope of the present disclosure.

The terms used in the embodiments of the present disclosure are merely for the purpose of describing particular embodiments, and are not intended to limit the embodiments of the present disclosure. The singular forms "a" and "the" used in the embodiments of the present disclosure and the appended claims are also intended to include plural forms, unless the context clearly indicates other meanings. It should also be understood that the term "and/or" as used here refers to and includes any or all possible combinations of one or more associated listed items.

It should be understood that although the terms first, second, third, etc., may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the word "if" as used here may be interpreted as "at the time..." or "when..." or "in response to determining".

For purposes of brevity and ease of understanding, when representing a size relationship, the terms used here are "greater than" or "less than", "higher than" or "lower than". However, for those skilled in the art, it may be understood that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

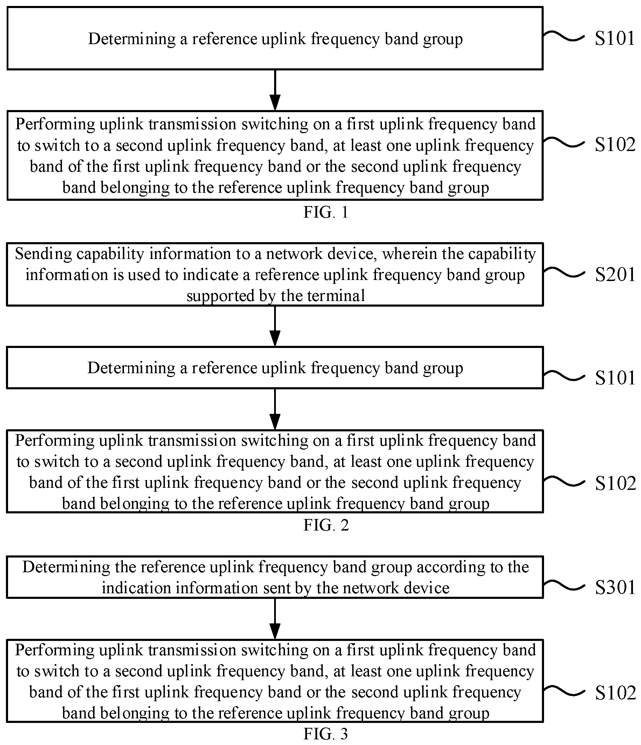

FIG. 1 is a schematic flowchart of a method for uplink transmission switching shown according to an embodiment of the present disclosure. The method for uplink transmission switching shown in the embodiment may be performed by a terminal, and the terminal includes but is not limited to a communication apparatus such as a mobile phone, a tablet computer, a wearable device, a sensor, and an Internet of Things device. The terminal may communicate with a network device, and the network device includes but is not limited to a network device in a communication system such as 4G, 5G, or 6G, for example, a base station or a core network, etc.

As shown in FIG. 1, the method for uplink transmission switching may include the following steps.

In step S101, a reference uplink frequency band group is determined.

In step S102, uplink transmission switching (UL TX switching) is performed on a first uplink frequency band to switch to a second uplink frequency band. Specifically, uplink transmission switching may be performed on a carrier in the first uplink frequency band to switch to a carrier in the second uplink frequency band.

Among them, at least one uplink frequency band in the first uplink frequency band or the second uplink frequency band belongs to the reference uplink frequency band group, which may also be described as it is not desired for the terminal that neither the first uplink frequency band nor the second uplink frequency band belongs to the reference uplink frequency band group.

In an embodiment, a scenario in which the terminal performs uplink transmission switching includes but is not limited to a scenario of dual connectivity (for example, EN-DC), carrier aggregation (for example, an inter-band carrier aggregation (inter-band CA)), supplementary uplink (SUL), or the like.

For example, it is taken as an example that the terminal performs uplink transmission switching and switches from the first uplink frequency band to the second uplink frequency band.

In the scenario of dual connectivity, the terminal performs uplink transmission switching, and it may switch from a primary cell group carrier to a secondary cell group carrier, where the primary cell group carrier belongs to the first uplink frequency band, and the secondary cell group carrier belongs to the second uplink frequency band.

In the scenario of carrier aggregation, for example, the aggregation of a carrier in frequency band#1 and a carrier in frequency band#2, the terminal performs uplink transmission switching, and may switch from the carrier in band#1 to a carrier in band#2, where the first uplink frequency band may be band#1, and the second uplink frequency band may be band#2.

In the scenario of supplementary uplink, the terminal performs uplink transmission switching, and may switch from a normal uplink carrier to a supplementary uplink carrier, where the normal uplink carrier belongs to the first uplink frequency band, and the supplementary uplink carrier belongs to the second uplink frequency band.

In an embodiment, the policy for performing uplink transmission switching by the terminal includes but is not limited to the following two manners.

The terminal does not support simultaneously performing uplink transmission on two uplink frequency bands, that is, SwitchedUL.

The terminal supports simultaneously performing uplink transmission on two uplink frequency bands, that is, DualUL.

The network device may indicate which policy is to be used by the terminal, for example, the network may perform indication through radio resource control (RRC) signaling.

In an embodiment, currently, when performing uplink transmission switching, for the three application scenarios, the terminal only considers to switch between two uplink frequency bands. In this case, the terminal only needs to prepare for communication on the two uplink frequency bands. However, when it is needed for the terminal to support performing uplink transmission switching between more than two frequency bands, the terminal needs to prepare for communication on more than two uplink frequency bands, which may lead to an increase in complexity of performing uplink transmission switching. Therefore, it is necessary to consider how to reduce the complexity of performing uplink transmission switching.

According to an embodiment of the present disclosure, the terminal may determine a reference uplink frequency band group, and then switch from a first uplink frequency band to a second uplink frequency band when performing uplink transmission switching, and at least one uplink frequency band of the first uplink frequency band or the second uplink frequency band belongs to the reference uplink frequency band group. Among them, the reference uplink frequency band group may include one or more frequency bands; and the quantity of frequency bands included in the uplink frequency band group may be less than the quantity of uplink frequency bands supported by the terminal, or less than the quantity of uplink frequency bands corresponding to carriers configured by the network device for the terminal to perform uplink transmission switching.

For example, the reference uplink frequency band group may include two uplink frequency bands. The quantity of uplink frequency bands supported by the terminal, or the quantity of uplink frequency bands corresponding to carriers configured by the network device for the terminal to perform uplink transmission switching may be 3 or 4. Among them, when the reference uplink frequency band group includes two uplink frequency bands, the reference uplink frequency band group may also be referred to as a reference uplink frequency band pair (or, a reference UL band pair).

Since at least one uplink frequency band of the first uplink frequency band or the second uplink frequency band belongs to the reference uplink frequency band group, the uplink transmission switching performed by the terminal only includes three cases. In a first case, it is switched from an uplink frequency band in the reference uplink frequency band group to an uplink frequency band other than the reference uplink frequency band group. In a second case, it is switched from an uplink frequency band other than the reference uplink frequency band group to an uplink frequency band in the reference uplink frequency band group. In a third case, it is switched between uplink frequency bands included in the reference uplink frequency band group.

Since the quantity of frequency bands included in the reference uplink frequency band group is less than the quantity of uplink frequency bands supported by the terminal, or less than the quantity of uplink frequency bands corresponding to carriers configured by the network device for the terminal to perform uplink transmission switching, therefore, when performing uplink transmission switching based on the foregoing three cases, for the combinations of the first uplink frequency band and the second uplink frequency band that need to be considered, there may be relatively less combinations of the first uplink frequency band and the second uplink frequency band that need to be considered, relatively to performing uplink transmission switching among carriers corresponding to all uplink frequency bands supported by the terminal, or relatively to performing uplink transmission switching among carriers corresponding to all uplink frequency bands configured by the network device for the terminal. **In** this case, there may be relatively less combinations of the first uplink frequency band and the second uplink frequency band that need to be considered by the terminal to prepare (for example, in the aspect of software, hardware, and switching process) for performing uplink transmission switching, thus facilitating reducing the complexity of performing uplink transmission switching by the terminal.

It should be noted that the reference uplink frequency band group may be changed according to needs, and each reference uplink frequency band group may take effect in the corresponding effective period. In the effective period, there may be relatively less combinations of the first uplink frequency band and the second uplink frequency band that need to be considered by the terminal to prepare for performing uplink transmission switching, thus reducing the complexity of performing uplink transmission switching by the terminal in the effective period. In addition, the uplink frequency bands included in different reference uplink frequency band groups may be completely different, or partially the same. The uplink transmission switching mechanism in Rel-17 may be supported by the terminal when performing uplink transmission switching.

In an embodiment, in a case that at least one uplink frequency band of the first uplink frequency band or the second uplink frequency band belongs to the reference uplink frequency band group, the terminal may support 2TX-to-2TX. That is, the terminal may support the two transmission links (2TX) on the first uplink frequency band, and also support the two transmission links on the second uplink frequency band to which after the terminal switches.

In a case that neither the first uplink frequency band nor the second uplink frequency band belongs to the reference uplink frequency band group, the terminal only supports 1TX-to-1TX. That is, the terminal only supports one link transmission (1TX) on the first uplink frequency band, and also only supports one link transmission on the second uplink frequency band to which after the terminal switches. In this case, since neither the first uplink frequency band nor the second uplink frequency band belongs to the reference uplink frequency band group, there may be relatively more combinations of the first uplink frequency band and the second uplink frequency band that the terminal needs to consider. By limiting that the terminal only supports 1TX-to-1TX, the terminal only needs to prepare for one transmission link on each uplink frequency band, without preparing for the two transmission links, which is beneficial to reducing the complexity of performing uplink transmission switching by the terminal.

FIG. 2 is a schematic flowchart of another method for uplink transmission switching shown according to an embodiment of the present disclosure. As shown in FIG. 2, the method further includes the following step.

In step S201, capability information is sent to a network device, where the capability information is used to indicate a reference uplink frequency band group supported by the terminal.

In an embodiment, the terminal may send capability information to the network device; for example, the capability information may be carried in auxiliary information of the user equipment and sent to the network device. The capability information may indicate the reference uplink frequency band group supported by the terminal, where each uplink frequency band included in the reference uplink frequency band group supported by the terminal is an uplink frequency band supported by the terminal.

The network device may be enabled to know the reference uplink frequency band group supported by the terminal through the capability information, so that when the network device subsequently indicates the reference uplink frequency band group that needs to be used by the terminal, the network device may select the reference uplink frequency band group from the reference uplink frequency band group supported by the terminal to indicate the reference uplink frequency band group to the terminal, which helps to ensure that the reference uplink frequency band group determined by the terminal is a reference uplink frequency band group that may be supported by the terminal, thus avoiding resource waste caused by the terminal preparing for a reference uplink frequency band group that is not supported by the terminal itself.

FIG. 3 is a schematic flowchart of still another method for uplink transmission switching shown according to an embodiment of the present disclosure. As shown in FIG. 3, determining the reference uplink frequency band group includes the following step.

In step S301, the reference uplink frequency band group is determined according to indication information sent by the network device.

In an embodiment, the reference uplink frequency band group determined by the terminal may be indicated by the network device, for example, determined according to indication information of the network device, where the indication information includes but is not limited to RRC signaling or a media access control layer control element (MAC CE).

In an embodiment, a reference uplink frequency band group indicated by the indication information is included in the reference uplink frequency band group supported by the terminal. For example, the network device may determine the reference uplink frequency band group supported by the terminal according to the capability information reported by the terminal, and then select the reference uplink frequency band group from the reference uplink frequency band group supported by the terminal and indicate the reference uplink frequency band group to the terminal, so as to ensure that the reference uplink frequency band group determined by the terminal is a reference uplink frequency band group that may be supported by the terminal, thus avoiding resource waste caused by the terminal preparing for a reference uplink frequency band group that is not supported by the terminal itself.

In an embodiment, determining the reference uplink frequency band group includes determining the reference uplink frequency band group based on a protocol agreement. In addition to determining the reference uplink frequency band group according to the indication information sent by the network device, the reference uplink frequency band group may also be determined based on a protocol agreement. The manner of determining the reference uplink frequency band group may be selected according to needs, which is not limited in the present disclosure.

In an embodiment, a reference uplink frequency band group agreed by a protocol includes a fixed reference uplink frequency band group in a reference uplink frequency band group candidate set configured by the network device, where a reference uplink frequency band group in the reference uplink frequency band group candidate set is included in the reference uplink frequency band group supported by the terminal.

The network device may configure the reference uplink frequency band group candidate set for the terminal in advance, and it may be agreed by the protocol that the fixed reference uplink frequency band group in the reference uplink frequency band group candidate set is the reference uplink frequency band group determined by the terminal. Among them, the fixed reference uplink frequency band group may be a reference uplink frequency band group with a predetermined sequence or a reference uplink frequency band group with a fixed identification in the reference uplink frequency band group candidate set.

In addition, by limiting that the reference uplink frequency band group in the reference uplink frequency band group candidate set is included in the reference uplink frequency band group supported by the terminal, the reference uplink frequency band group determined in the reference uplink frequency band group candidate set may be a reference uplink frequency band group that can be supported by the terminal, thus avoiding resource waste caused by the terminal preparing for a reference uplink frequency band group that is not supported by the terminal itself.

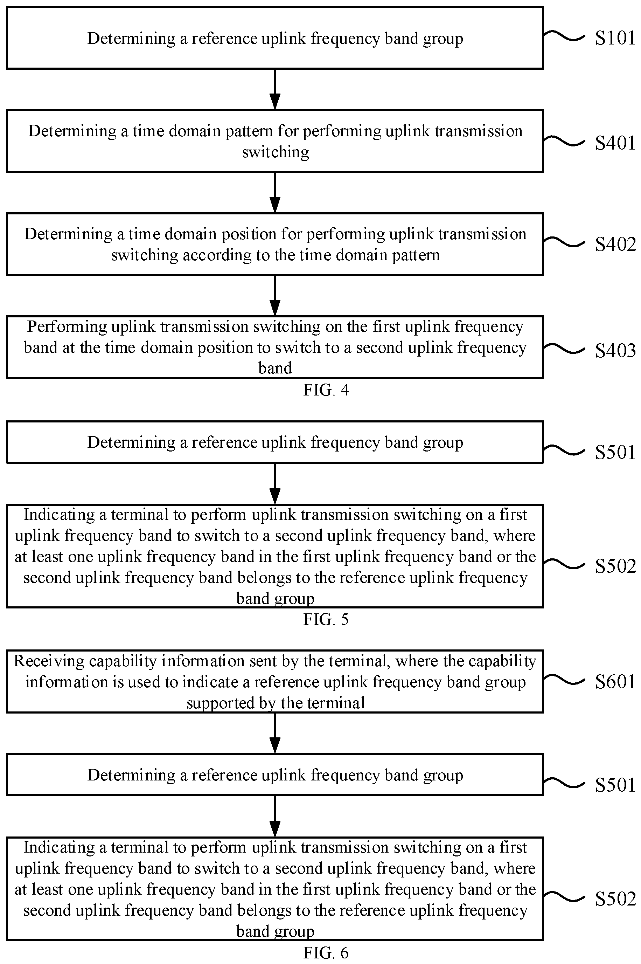

FIG. 4 is a schematic flowchart of still another method for uplink transmission switching shown according to an embodiment of the present disclosure. As shown in FIG. 4, performing uplink transmission switching on the first uplink frequency band to switch to the second uplink frequency band includes the following steps.

In step S401, a time domain pattern for performing uplink transmission switching is determined.

In step S402, a time domain position for performing uplink transmission switching is determined according to the time domain pattern.

In step S403, uplink transmission switching is performed on the first uplink frequency band at the time domain position to switch to the second uplink frequency band.

In an embodiment, the terminal may perform uplink transmission switching in some time domain resources, and stop uplink transmission switching in some time domain resources. The association relationship between uplink transmission switching performed by the terminal and the time domain resources may be determined based on a time domain pattern, where the time domain pattern may be indicated by the network device, or may be determined based on a protocol agreement.

According to the time domain pattern, the terminal may determine a position of the time domain resource (referred to as a time domain position for short) where the terminal needs to perform uplink transmission. Furthermore, uplink transmission switching may be performed at the determined time domain position, so as to switch from the first uplink frequency band to the second uplink frequency band.

FIG. 5 is a schematic flowchart of a method for uplink transmission switching indication shown according to an embodiment of the present disclosure. The method for uplink transmission switching indication shown in the embodiment may be performed by a network device. The network device may communicate with a terminal. The network device includes but is not limited to a base station in a communication system such as a 4G base station, a 5G base station, a 6G base station, or the like. The terminal includes but is not limited to a communication apparatus such as a mobile phone, a tablet computer, a wearable device, a sensor, an Internet of Things device, or the like.

As shown in FIG. 5, the method for uplink transmission switching indication may include the following steps.

In step S501, a reference uplink frequency band group is determined.

In step S502, the terminal is indicated to perform uplink transmission switching on a first uplink frequency band to switch to a second uplink frequency band, where at least one uplink frequency band of the first uplink frequency band or the second uplink frequency band belongs to the reference uplink frequency band group.

In an embodiment, a scenario in which the terminal performs uplink transmission switching includes but is not limited to a scenario of dual connectivity (for example, EN-DC), carrier aggregation (for example, Inter-band carrier aggregation (Inter-band CA)), and supplementary uplink (SUL), or the like.

For example, it is taken as an example that the terminal performs uplink transmission switching and switches from the first uplink frequency band to the second uplink frequency band.

In the scenario of dual connectivity, the terminal performs uplink transmission switching, and it may switch from a primary cell group carrier to a secondary cell group carrier, where the primary cell group carrier belongs to the first uplink frequency band, and the secondary cell group carrier belongs to the second uplink frequency band.

In the scenario of carrier aggregation, for example, the aggregation of a carrier in frequency band#1 and a carrier in frequency band#2, the terminal performs uplink transmission switching, and may switch from the carrier in band#1 to a carrier in band#2, where the first uplink frequency band may be band#1, and the second uplink frequency band may be band#2.

In the scenario of supplementary uplink, the terminal performs uplink transmission switching, and may switch from a normal uplink carrier to a supplementary uplink carrier, where the normal uplink carrier belongs to the first uplink frequency band, and the supplementary uplink carrier belongs to the second uplink frequency band.

In an embodiment, the policy for performing uplink transmission switching by the terminal includes but is not limited to the following two manners.

The terminal does not support simultaneously performing uplink transmission on two uplink frequency bands, that is, SwitchedUL.

The terminal supports simultaneously performing uplink transmission on two uplink frequency bands, that is, DualUL.

The network device may indicate which policy is to be used by the terminal, for example, the network may perform indication through RRC signaling.

In an embodiment, currently, when performing uplink transmission switching, for the three application scenarios, the terminal only considers to switch between two uplink frequency bands. In this case, the terminal only needs to prepare for communication on the two uplink frequency bands. However, when it is needed for the terminal to support performing uplink transmission switching between more than two frequency bands, the terminal needs to prepare for communication on more than two uplink frequency bands, which may lead to an increase in complexity of performing uplink transmission switching. Therefore, it is necessary to consider how to reduce the complexity of performing uplink transmission switching.

According to an embodiment of the present disclosure, the network device may determine a reference uplink frequency band group, and then, when indicating the terminal to perform uplink transmission switching and switch from the first uplink frequency band to the second uplink frequency band, the network device may define that at least one uplink frequency band of the first uplink frequency band or the second uplink frequency band belongs to the reference uplink frequency band group.

Among them, the manner of indicating the terminal to perform uplink transmission switching by the network device, includes but is not limited to perform indication through RRC signaling, downlink control information (DCI), or MAC CE. The reference uplink frequency band group may include one or more frequency bands; and the quantity of frequency bands included in the uplink frequency band group may be less than the quantity of uplink frequency bands supported by the terminal, or less than the quantity of uplink frequency bands corresponding to carriers configured by the network device for the terminal to perform uplink transmission switching.

For example, the reference uplink frequency band group may include two uplink frequency bands. The quantity of uplink frequency bands supported by the terminal, or the quantity of uplink frequency bands corresponding to carriers configured by the network device for the terminal to perform uplink transmission switching may be 3 or 4. Among them, when the reference uplink frequency band group includes two uplink frequency bands, the reference uplink frequency band group may also be referred to as a reference uplink frequency band pair (or, a reference UL band pair).

Since at least one uplink frequency band of the first uplink frequency band or the second uplink frequency band belongs to the reference uplink frequency band group, the uplink transmission switching performed by the terminal only includes three cases. In a first case, it is switched from an uplink frequency band in the reference uplink frequency band group to an uplink frequency band other than the reference uplink frequency band group. In a second case, it is switched from an uplink frequency band other than the reference uplink frequency band group to an uplink frequency band in the reference uplink frequency band group. In a third case, it is switched between uplink frequency bands included in the reference uplink frequency band group.

Since the quantity of frequency bands included in the reference uplink frequency band group is less than the quantity of uplink frequency bands supported by the terminal, or less than the quantity of uplink frequency bands corresponding to carriers configured by the network device for the terminal to perform uplink transmission switching, therefore, when performing uplink transmission switching based on the foregoing three cases, for the combinations of the first uplink frequency band and the second uplink frequency band that need to be considered, there may be relatively less combinations of the first uplink frequency band and the second uplink frequency band that need to be considered, relatively to performing uplink transmission switching among carriers corresponding to all uplink frequency bands supported by the terminal, or relatively to performing uplink transmission switching among carriers corresponding to all uplink frequency bands configured by the network device for the terminal. In this case, there may be relatively less combinations of the first uplink frequency band and the second uplink frequency band that need to be considered by the terminal to prepare (for example, in the aspect of software, hardware, and switching process) for performing uplink transmission switching, thus facilitating reducing the complexity of performing uplink transmission switching by the terminal.

FIG. 6 is a schematic flowchart of another method for uplink transmission switching indication shown according to an embodiment of the present disclosure. As shown in FIG. 6, the method further includes the following step.

In step S601, capability information sent by a terminal is received, where the capability information is used to indicate a reference uplink frequency band group supported by the terminal.

In an embodiment, the terminal may send capability information to the network device; for example, the capability information may be carried in auxiliary information of the user equipment and sent to the network device. The network device may determine the reference uplink frequency band group supported by the terminal according to the received capability information, where each uplink frequency band included in the reference uplink frequency band group supported by the terminal is an uplink frequency band supported by the terminal.

The reference uplink frequency band group supported by the terminal may be determined according to the capability information, so that when the reference uplink frequency band group that needs to be used by the terminal is subsequently indicated, the reference uplink frequency band group may be selected from the reference uplink frequency band group supported by the terminal and indicated to the terminal, which helps to ensure that the reference uplink frequency band group determined by the terminal is a reference uplink frequency band group that may be supported by the terminal, thus avoiding resource waste caused by the terminal preparing for a reference uplink frequency band group that is not supported by the terminal itself.

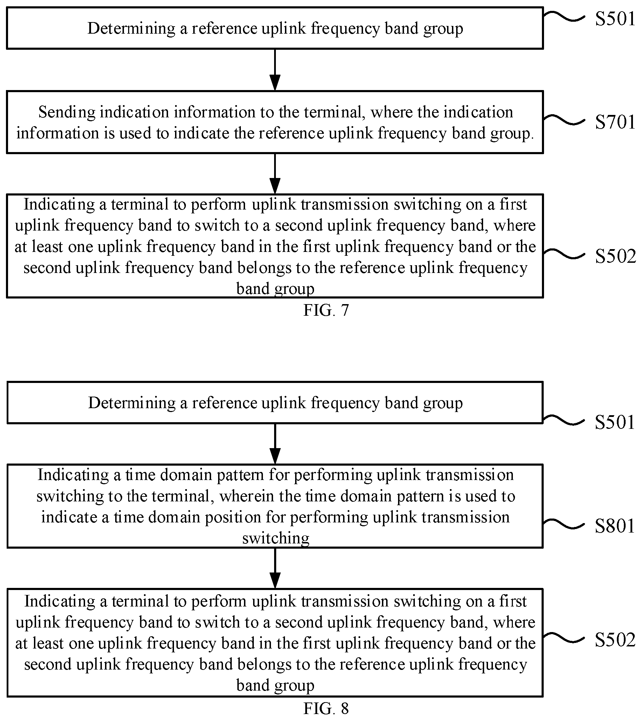

FIG. 7 is a schematic flowchart of still another method for uplink transmission switching indication shown according to an embodiment of the present disclosure. As shown in FIG. 7, the method further includes the following step.

In step S701, indication information is sent to the terminal, where the indication information is used to indicate the reference uplink frequency band group.

In an embodiment, the reference uplink frequency band group may be determined by the network device, and then indicated to the terminal through the indication information, where the indication information includes but is not limited to RRC signaling or a media access control control element (MAC CE).

In an embodiment, a reference uplink frequency band group indicated by the indication information is included in the reference uplink frequency band group supported by the terminal. For example, the network device may determine the reference uplink frequency band group supported by the terminal according to the capability information reported by the terminal, and then select the reference uplink frequency band group from the reference uplink frequency band group supported by the terminal and indicate the reference uplink frequency band group to the terminal, so as to ensure that the reference uplink frequency band group determined by the terminal is a reference uplink frequency band group that may be supported by the terminal, thus avoiding resource waste caused by the terminal preparing for a reference uplink frequency band group that is not supported by the terminal itself.

In an embodiment, determining the reference uplink frequency band group includes determining the reference uplink frequency band group based on a protocol agreement. **In** addition to determining the reference uplink frequency band group according to needs and then indicating it to the terminal, the reference uplink frequency band group may also be determined based on a protocol agreement. The manner of determining the reference uplink frequency band group may be selected according to needs, which is not limited in the present disclosure.

In an embodiment, a reference uplink frequency band group agreed by a protocol includes a fixed reference uplink frequency band group in a reference uplink frequency band group candidate set configured for the terminal, where a reference uplink frequency band group in the reference uplink frequency band group candidate set is included in the reference uplink frequency band group supported by the terminal.

The network device may configure the reference uplink frequency band group candidate set for the terminal in advance, and it may be agreed by the protocol that the fixed reference uplink frequency band group in the reference uplink frequency band group candidate set is the reference uplink frequency band group determined by the terminal. Among them, the fixed reference uplink frequency band group may be a reference uplink frequency band group with a predetermined sequence or a reference uplink frequency band group with a fixed identification in the reference uplink frequency band group candidate set.

In addition, by limiting that the reference uplink frequency band group in the reference uplink frequency band group candidate set is included in the reference uplink frequency band group supported by the terminal, the reference uplink frequency band group determined in the reference uplink frequency band group candidate set may be a reference uplink frequency band group that can be supported by the terminal, thus avoiding resource waste caused by the terminal preparing for a reference uplink frequency band group that is not supported by the terminal itself.

FIG. 8 is a schematic flowchart of still another method for uplink transmission switching indication shown according to an embodiment of the present disclosure. As shown in FIG. 8, indicating the terminal to perform uplink transmission switching on the first uplink frequency band to switch to the second uplink frequency band includes the following step.

In step S801, a time domain pattern for performing uplink transmission switching is indicated to the terminal, where the time domain pattern is used to indicate a time domain position for performing uplink transmission switching.

In an embodiment, the case of performing uplink transmission switching by the terminal may be controlled, so that the terminal may perform uplink transmission switching in some time domain resources, and stop uplink transmission switching in some time domain resources. The association relationship between uplink transmission switching performed by the terminal and the time domain resources may be indicated by using a time domain pattern. According to the time domain pattern, the terminal may determine a position of the time domain resource (referred to as a time domain position for short) where the terminal needs to perform uplink transmission. Furthermore, uplink transmission switching may be performed at the determined time domain position, so as to switch from the first uplink frequency band to the second uplink frequency band.

According to an embodiment of the present disclosure, there is further provided a system for uplink transmission switching, including a terminal and a network device, where the terminal is configured to implement the method for uplink transmission switching according to any one of the foregoing embodiments, and the network device is configured to implement the method for uplink transmission switching indication according to any one of the foregoing embodiments.

In an embodiment, the terminal may determine the reference uplink frequency band group, and perform uplink transmission switching on the first uplink frequency band to switch to the second uplink frequency band. In this process, it is necessary to ensure that at least one uplink frequency band of the first uplink frequency band or the second uplink frequency band belongs to the reference uplink frequency band group.

Correspondingly, the network device may also determine the uplink frequency band group, and indicate the terminal to perform uplink transmission switching on the first uplink frequency band to switch to the second uplink frequency band, where it may be configured as that at least one uplink frequency band of the first uplink frequency band or the second uplink frequency band belongs to the reference uplink frequency band group.

Since at least one uplink frequency band of the first uplink frequency band or the second uplink frequency band belongs to the reference uplink frequency band group, for the combinations of the first uplink frequency band and the second uplink frequency band that need to be considered by the terminal for performing uplink transmission switching, there may be relatively less combinations of the first uplink frequency band and the second uplink frequency band that need to be considered, relatively to performing uplink transmission switching among carriers corresponding to all uplink frequency bands supported by the terminal, or relatively to performing uplink transmission switching among carriers corresponding to all uplink frequency bands configured by the network device for the terminal. In this case, there may be relatively less combinations of the first uplink frequency band and the second uplink frequency band that need to be considered by the terminal to prepare (for example, in the aspect of software, hardware, and switching process) for performing uplink transmission switching, thus facilitating reducing the complexity of performing uplink transmission switching by the terminal.

Corresponding to the foregoing embodiments of the method for uplink transmission switching and the method for uplink transmission switching indication, the present disclosure further provides embodiments of an apparatus for uplink transmission switching and an apparatus for uplink transmission switching indication.

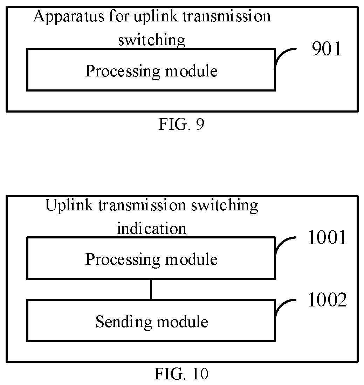

FIG. 9 is a schematic block diagram of an apparatus for uplink transmission switching shown according to an embodiment of the present disclosure. The apparatus for uplink transmission switching shown in the embodiment may be a terminal or an apparatus composed of modules in the terminal. The terminal includes but is not limited to a communication apparatus such as a mobile phone, a tablet computer, a wearable device, a sensor, and an Internet of Things device. The terminal may communicate with a network device, and the network device includes but is not limited to a network device in a communication system such as 4G, 5G, and 6G, for example, a base station or a core network, etc.

As shown in FIG. 9, the apparatus for uplink transmission switching includes a processing module 901.

The processing module 901 is configured to: determine a reference uplink frequency band group, and perform uplink transmission switching on a first uplink frequency band to switch to a second uplink frequency band, where at least one uplink frequency band of the first uplink frequency band or the second uplink frequency band belongs to the reference uplink frequency band group.

In an embodiment, the apparatus further includes a sending module, configured to send capability information to a network device, where the capability information is used to indicate a reference uplink frequency band group supported by the terminal.

In an embodiment, the processing module is configured to determine the reference uplink frequency band group according to indication information sent by the network device.

In an embodiment, a reference uplink frequency band group indicated by the indication information is included in the reference uplink frequency band group supported by the terminal.

In an embodiment, the processing module is configured to determine the reference uplink frequency band group based on a protocol agreement.

In an embodiment, a reference uplink frequency band group agreed by a protocol includes a fixed reference uplink frequency band group in a reference uplink frequency band group candidate set configured by the network device, where a reference uplink frequency band group in the reference uplink frequency band group candidate set is included in the reference uplink frequency band group supported by the terminal.

In an embodiment, the processing module is configured to: determine a time domain pattern for performing uplink transmission switching; determine a time domain position for performing uplink transmission switching according to the time domain pattern; and, perform uplink transmission switching on the first uplink frequency band at the time domain position to switch to the second uplink frequency band.

FIG. 10 is a schematic block diagram of an apparatus for uplink transmission switching indication shown according to an embodiment of the present disclosure. The apparatus for uplink transmission switching indication shown in the embodiment may be a network device or an apparatus composed of modules in the network device. The network device may communicate with the terminal. The terminal includes but is not limited to a communication apparatus such as a mobile phone, a tablet computer, a wearable device, a sensor, and an Internet of Things device. The network device includes but is not limited to a network device in a communication system such as 4G, 5G, and 6G, for example, a base station or a core network, etc.

As shown in FIG. 10, the apparatus for uplink transmission switching indication includes a processing module 1001 and a sending module 1002.

The processing module 1001 is configured to determine a reference uplink frequency band group.

The sending module 1002 is configured to indicate a terminal to perform uplink transmission switching on a first uplink frequency band to switch to a second uplink frequency band.

Among them, at least one uplink frequency band of the first uplink frequency band or the second uplink frequency band belongs to the reference uplink frequency band group.

In an embodiment, the apparatus further includes a receiving module, configured to receive capability information sent by the terminal, where the capability information is used to indicate a reference uplink frequency band group supported by the terminal.

In an embodiment, the sending module is further configured to send indication information to the terminal, where the indication information is used to indicate the reference uplink frequency band group.

In an embodiment, a reference uplink frequency band group indicated by the indication information is included in the reference uplink frequency band group supported by the terminal.

In an embodiment, the processing module is configured to determine the reference uplink frequency band group based on a protocol agreement.

In an embodiment, a reference uplink frequency band group agreed by a protocol includes a fixed reference uplink frequency band group in a reference uplink frequency band group candidate set configured for the terminal, where a reference uplink frequency band group in the reference uplink frequency band group candidate set is included in the reference uplink frequency band group supported by the terminal.

In an embodiment, the sending module is configured to indicate a time domain pattern for performing uplink transmission switching to the terminal, where the time domain pattern is used to indicate a time domain position for performing uplink transmission switching.

With regard to the apparatus in the above embodiments, the specific manner in which the modules perform operations has been described in detail in the embodiments of the related method, which will not be elaborated here.

For the apparatus embodiments, since the apparatus embodiments basically correspond to the method embodiments, for the related part, reference may be made to the description of the method embodiments. The apparatus embodiments described above are merely illustrative, where the modules described as separate parts may or may not be physically separate, and parts displayed as modules may or may not be physical modules, that is, they may be located in one position, or may be distributed on a plurality of network modules. Some or all of the modules may be selected according to actual needs to achieve the objectives of the solutions of the embodiments. Those of ordinary skill in the art may understand and implement the embodiments without creative efforts.

According to embodiments of the present disclosure, there is further provided a communication apparatus, including: a processor; and a memory configured to store a computer program, where, when the computer program is executed by the processor, the method for uplink transmission switching according to any one of the foregoing embodiments is implemented.

According to embodiments of the present disclosure, there is further provided a communication apparatus, including: a processor; and a memory configured to store a computer program, where, when the computer program is executed by the processor, the method for uplink transmission switching indication according to any one of the foregoing embodiments is implemented.

According to embodiments of the present disclosure, there is further provided a computer-readable storage medium, configured to store a computer program, and when the computer program is executed by a processor, the method for uplink transmission switching according to any one of the foregoing embodiments is implemented.

According to embodiments of the present disclosure, there is further provided a computer-readable storage medium, configured to store a computer program, and when the computer program is executed by a processor, the method for uplink transmission switching indication according to any one of the foregoing embodiments is implemented.

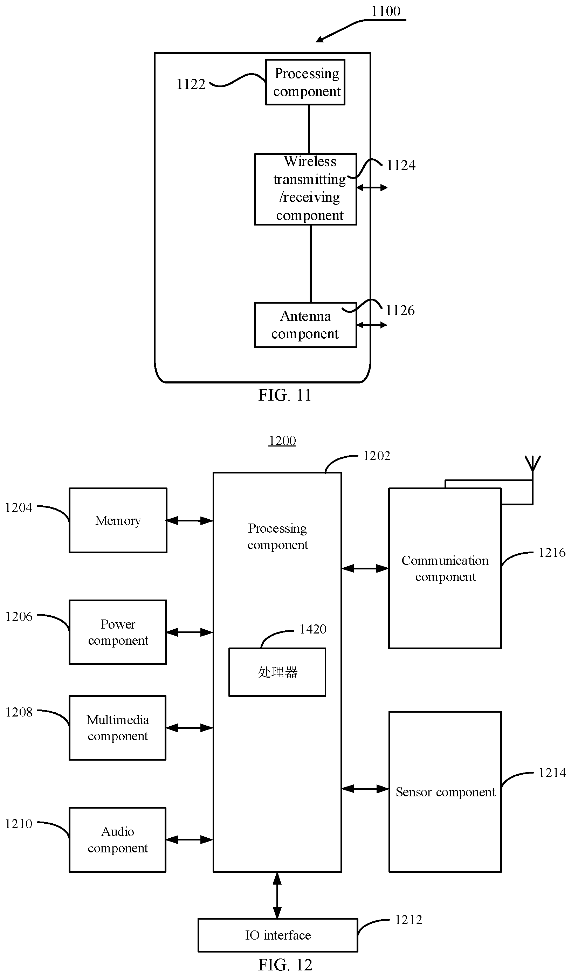

As shown in FIG. 11, FIG. 11 is a schematic block diagram of an apparatus 1100 for uplink transmission switching indication shown according to an embodiment of the present disclosure. The apparatus 1100 may be provided as a base station. Referring to FIG. 11, the apparatus 1100 includes a processing component 1122, a wireless transmitting/receiving component 1124, an antenna component 1126, and a signal processing portion specific to a wireless interface. The processing component 1122 may further include one or more processors. One processor in the processing component 1122 may be configured to implement the method for uplink transmission switching indication according to any one of the foregoing embodiments.

FIG. 12 is a schematic block diagram of an apparatus 1200 for uplink transmission switching shown according to an embodiment of the present disclosure. For example, the apparatus 1200 may be a mobile phone, a computer, a digital broadcast terminal, a message transceiver device, a game console, a tablet device, a medical device, an exercise device, a personal digital assistant, or the like.

Referring to FIG. 12, the apparatus 1200 may include one or more of the following components: a processing component 1202, a memory 1204, a power component 1206, a multimedia component 1208, an audio component 1210, an input/output (IO) interface 1212, a sensor component 1214, and a communication component 1216.

The processing component 1202 generally controls overall operations of the apparatus 1200, such as operations associated with display, telephone calls, data communication, camera operations, and recording operations. The processing component 1202 may include one or more processors 1220 to execute instructions to complete all or part of the steps of the method for uplink transmission switching. In addition, the processing component 1202 may include one or more modules to facilitate interaction between the processing component 1202 and other components. For example, the processing component 1202 may include a multimedia module to facilitate the interaction between the multimedia component 1208 and the processing component 1202.

The memory 1204 is configured to store various types of data to support the operations of the apparatus 1200. Examples of such data include instructions for any application or method operating on the apparatus 1200, contact data, phonebook data, messages, pictures, videos, etc. The memory 1204 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 1206 provides power to various components of the apparatus 1200. The power component 1206 may include a power management system, one or more power supplies, and other components associated with generation, management, and distribution of power for the apparatus 1200.

The multimedia component 1208 includes a screen providing an output interface between the apparatus 1200 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense a boundary of a touch or slide action, but also detect a duration and pressure associated with the touch or slide action. In some embodiments, the multimedia component 1208 includes a front camera and/or a rear camera. The front camera and/or the rear camera may receive external multimedia data when the apparatus 1200 is in an operation mode, such as a photographing mode or a video mode. Each of the front camera and the rear camera may be a fixed optical lens system or have focal length and optical zoom capability.

The audio component 1210 is configured to output and/or input audio signals. For example, the audio component 1210 includes a microphone (MIC) configured to receive an external audio signal when the apparatus 1200 is in an operation mode, such as a call mode, a recording mode, and a speech recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and a peripheral interface module. The peripheral interface module may be a keyboard, a click wheel, a button, or the like. The button may include, but is not limited to, a home button, a volume button, a starting button, and a locking button.

The sensor component 1214 includes one or more sensors to provide status assessments of various aspects of the apparatus 1200. For example, the sensor component 1214 may detect an on/off state of the apparatus 1200, and relative positioning of the components, for example, the components being a display and a keypad of the apparatus 1200. The sensor component 1214 may also detect the position change of the apparatus 1200 or a component of the apparatus 1200, the presence or absence of contact by the user with the apparatus 1200, the orientation or acceleration/deceleration of the apparatus 1200, and the temperature change of the apparatus 1200. The sensor component 1214 may include a proximity sensor configured to detect the presence of nearby objects without any physical contact. The sensor component 1214 may also include an optical sensor, such as a CMOS or CCD image sensor, for use in imaging applications. In some embodiments, the sensor component 1214 may further include an acceleration sensor, a gyroscope sensor, a magnetic sensor, a pressure sensor, or a temperature sensor.

The communication component 1216 is configured to facilitate wired or wireless communication between the apparatus 1200 and other devices. The apparatus 1200 may access a wireless network based on a communication standard, such as WiFi, 2G, 3G, 4G LTE, 5G NR, or a combination of them. In an example embodiment, the communication component 1216 receives a broadcast signal or broadcast related information from an external broadcast management system via a broadcast channel. In an example embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In an example embodiment, the apparatus 1200 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the method for uplink transmission switchings described above.

In an example embodiment, there is further provided a non-transitory computer-readable storage medium including an instruction, for example, the memory 1204 including an instruction. The instruction may be executed by the processor 1220 of the apparatus 1200 to complete the method for uplink transmission switching. For example, the non-transitory computer-readable storage medium may be a ROM, a random access memory (RAM), a CD-ROM, a magnetic tape, a floppy disk, an optical data storage device, or the like.

Other embodiments of the present disclosure will be apparent to those skilled in the art from consideration of the description and practice of the disclosure disclosed here. The present disclosure is intended to cover any variations, uses, or adaptations of the present disclosure following the general principles of present disclosure and including common general knowledge and conventional technical means in the art not disclosed in the present disclosure. It is intended that the description and examples may be considered as exemplary only, with a true scope and spirit of the present disclosure being indicated by the following claims.

It should be understood that the present disclosure is not limited to the precise structures that have been described above and shown in the accompanying drawings, and various modifications and changes may be made without departing from the scope of the present disclosure. It is intended that the scope of the disclosure only may be limited by the appended claims.

It should be noted that, in the context, relational terms such as first and second are only used to distinguish one entity or operation from another entity or operation, and do not necessarily require or imply that any such actual relationship or sequence exists between these entities or operations. The terms "comprising", "including", or any other variations of them are intended to cover a non-exclusive inclusion, so that a process, method, article, or device that includes a series of elements includes not only those elements, but also other elements that are not explicitly listed, or elements inherent to such a process, method, article, or device. In the absence of more restrictions, the element limited by the statement "including a" does not exclude the existence of other identical elements in the process, method, article, or device that includes the element.

The method and apparatus provided in the embodiments of the present disclosure are described in detail. The principles and embodiments of the present disclosure are described here by using specific examples. The description of the above embodiments is only used to help understand the method of the present disclosure and the core concept of the present disclosure. Meanwhile, for those of ordinary skill in the art, according to the concept of the present disclosure, there may be changes in the specific implementations and the application ranges. In summary, the content of the present description should not be construed as limitations of the present disclosure.

## Claims

1. A method for uplink transmission switching, performed by a terminal, and comprising:
determining a reference uplink frequency band group; and
performing uplink transmission switching on a first uplink frequency band to switch to a second uplink frequency band;
wherein at least one uplink frequency band of the first uplink frequency band or the second uplink frequency band belongs to the reference uplink frequency band group.

2. The method according to claim 1, further comprising:
sending capability information to a network device, wherein the capability information is used to indicate a reference uplink frequency band group supported by the terminal.

3. The method according to claim 2, wherein determining the reference uplink frequency band group comprises:
determining the reference uplink frequency band group according to indication information sent by the network device.

4. The method according to claim 3, wherein a reference uplink frequency band group indicated by the indication information is comprised in the reference uplink frequency band group supported by the terminal.

5. The method according to claim 2, wherein determining the reference uplink frequency band group comprises:
determining the reference uplink frequency band group based on a protocol agreement.

6. The method according to claim 4, wherein a reference uplink frequency band group agreed by a protocol comprises a fixed reference uplink frequency band group in a reference uplink frequency band group candidate set configured by the network device;
wherein a reference uplink frequency band group in the reference uplink frequency band group candidate set is comprised in the reference uplink frequency band group supported by the terminal.

7. The method according to any one of claims 1 to 6, wherein performing uplink transmission switching on the first uplink frequency band to switch to the second uplink frequency band comprises:
determining a time domain pattern for performing uplink transmission switching;
determining a time domain position for performing uplink transmission switching according to the time domain pattern; and
performing uplink transmission switching on the first uplink frequency band at the time domain position to switch to the second uplink frequency band.

8. A method for uplink transmission switching indication, performed by a network device, and comprising:
determining a reference uplink frequency band group; and
indicating a terminal to perform uplink transmission switching on a first uplink frequency band to switch to a second uplink frequency band;
wherein at least one uplink frequency band in the first uplink frequency band or the second uplink frequency band belongs to the reference uplink frequency band group.

9. The method according to claim 8, further comprising:
receiving capability information sent by the terminal, wherein the capability information is used to indicate a reference uplink frequency band group supported by the terminal.

10. The method according to claim 9, further comprising:
sending indication information to the terminal, wherein the indication information is used to indicate the reference uplink frequency band group.

11. The method according to claim 10, wherein a reference uplink frequency band group indicated by the indication information is comprised in the reference uplink frequency band group supported by the terminal.

12. The method according to claim 9, wherein determining the reference uplink frequency band group comprises:
determining the reference uplink frequency band group based on a protocol agreement.

13. The method according to claim 12, wherein a reference uplink frequency band group agreed by a protocol comprises a fixed reference uplink frequency band group in a reference uplink frequency band group candidate set configured for the terminal;
wherein a reference uplink frequency band group in the reference uplink frequency band group candidate set is comprised in the reference uplink frequency band group supported by the terminal.

14. The method according to any one of claims 8 to 13, wherein indicating the terminal to perform uplink transmission switching on the first uplink frequency band to switch to the second uplink frequency band comprises:
indicating a time domain pattern for performing uplink transmission switching to the terminal, wherein the time domain pattern is used to indicate a time domain position for performing uplink transmission switching.

15. A system for uplink transmission switching, comprising a terminal and a network device, wherein the terminal is configured to implement the method for uplink transmission switching according to any one of claims 1 to 7, and the network device is configured to implement the method for uplink transmission switching indication according to any one of claims 8 to 14.

16. An apparatus for uplink transmission switching, comprising:
a processing module, configured to determine a reference uplink frequency band group, and perform uplink transmission switching on a first uplink frequency band to switch to a second uplink frequency band;
wherein at least one uplink frequency band of the first uplink frequency band or the second uplink frequency band belongs to the reference uplink frequency band group.

17. An apparatus for uplink transmission switching indication, comprising:
a processing module, configured to determine a reference uplink frequency band group; and
a sending module, configured to indicate a terminal to perform uplink transmission switching on a first uplink frequency band to switch to a second uplink frequency band;
wherein at least one uplink frequency band of the first uplink frequency band or the second uplink frequency band belongs to the reference uplink frequency band group.

18. A communication apparatus, comprising:
a processor; and
a memory, configured to store a computer program;
wherein, when the computer program is executed by the processor, the method for uplink transmission switching according to any one of claims 1 to 7 is implemented.

19. A communication apparatus, comprising:
a processor; and
a memory, configured to store a computer program;
wherein, when the computer program is executed by the processor, the method for uplink transmission switching indication according to any one of claims 8 to 14 is implemented.

20. A computer-readable storage medium, configured to store a computer program, wherein when the computer program is executed by a processor, the method for uplink transmission switching according to any one of claims 1 to 7 is implemented.

21. A computer-readable storage medium, configured to store a computer program, wherein when the computer program is executed by a processor, the method for uplink transmission switching indication according to any one of claims 8 to 14 is implemented.
